Europäisches Patentamt

European Patent Office

Office européen des brevets

(11) Publication number: **0 065 831**
**A2**

# EUROPEAN PATENT APPLICATION

(21) Application number: **82302268.6**

(22) Date of filing: **04.05.82**

(51) Int. Cl.³: **G 01 N 11/02**

(30) Priority: **08.05.81 GB 8114214**

(43) Date of publication of application:
**01.12.82 Bulletin 82/48**

(84) Designated Contracting States:
**DE GB NL**

(71) Applicant: **AGAR CORPORATION N.V.**
**P.O. Box 812**
**Curacao Netherlands Antilles(NL)**

(72) Inventor: **Agar, Joram**
**P.O. Box 1764**
**Grand Cayman British West Indies(GB)**

(72) Inventor: **Zanker, Klaus Joachim**
**822 Pinesap**
**Houston Texas(US)**

(74) Representative: **Miller, Joseph et al,**
**J. MILLER & CO. Lincoln House 296-302 High Holborn**
**London WC1V 7JH(GB)**

(54) Method and apparatus for determining the viscosity of a sample fluid relative to that of a reference fluid.

(57) A method of determining the viscosity of a sample fluid (11) relative to that of a reference fluid (10), characterised by causing alternate flows of the sample fluid (11) and the reference fluid (10) through viscosity-sensitive means (13, 45), alternately employing a common sensor (14), in synchronism with said alternate flows, to effect measurements of a parameter related to the respective flows through the viscosity-sensitive means (13, 45); and comparing said measurements.

*Fig. 1.*

- 1 -

"METHOD AND APPARATUS FOR DETERMINING THE VISCOSITY
OF A SAMPLE FLUID RELATIVE TO THAT OF A REFERENCE FLUID"

This invention concerns a method and an apparatus for determining the viscosity of a sample fluid relative to that of a reference fluid.

Prior art viscometers are normally capillary viscometers or rotary cone or cylinder viscometers.

Capillary viscometers, which are based on the Hagen - Poiseuille law of viscous laminar flow in a pipe, are well-known. Such viscometers are based on the fact that

$$\Delta p = 32 L \mu V / d^2,$$

where L is the length of a pipe through which is to be passed the sample whose viscosity is to be measured, d is the internal diameter of the pipe,

$\Delta p$ is the pressure loss along the length L,

$\mu$ is the viscosity of the flow through the pipe, and V is the bulk velocity of the fluid, where $V = 4Q/d^2 \pi$,

Q being the volume flow.

Thus, provided the flow remains laminar, $\mu = \Delta p d^2 / 32 L V$. The flow will remain laminar provided that the Reynolds number $R_e = V d \rho / \mu < 2000$, where $\rho$ is the fluid density.

Such a viscometer needs to employ a capillary tube by reason of the fact that $\underline{d}$ needs to be small both in order to ensure laminar flow and to provide an acceptably high value of $\Delta p$ so that the latter can be measured in a reasonable length L of pipe.

Thus in such a capillary viscometer, determination of the value of the absolute viscosity $\mu$ involves determining the values of the two constants L and d and measuring the two variables $\Delta p$ and V (or Q).

It is common to employ a control so as to make $\Delta p$ constant and to measure V only, or to make V a constant and to measure $\Delta p$ only. In either case, however, the control needs to incorporate a measuring device and consequently the number of variables to be measured or controlled is not reduced.

Moreover, the viscosity of most fluids is considerably affected by the fluid temperature T. Thus with an absolute viscosity meter it is also necessary to control or measure the fluid temperature thereby increasing the number of variables to five. The use of a capillary tube, moreover, is suitable only for a Newtonian fluid having laminar flow, and the small bore of the capillary tube does not permit the meter to be used for the measurement of the viscosities of slurries and dirty fluids. Any abrasion or coating of the internal wall of the capillary tube will change its effective diameter, and will give errors in viscosity measurement of the order of four times the magnitude of the change in the effective diameter since $\mu \, \alpha \, d^4$ when the volume flow Q is measured.

In the case of the rotating cone or cylinder viscometer, instead of employing a capillary tube so as to induce shear in the fluid whose viscosity is to be measured, such shear is induced by passing the fluid through a fine clearance between a rotating and a stationary member. The use of such a fine clearance, however, has the disadvantages discussed above in relation to the use of a capillary tube, and in the case of such a rotating cone or cylinder viscometer, it is necessary to make absolute measurements of torque, speed and temperature. Moreover, self-heating of the sample can produce large changes in the measured viscosity.

According to one aspect of the present invention there is

- 3 -

therefore provided a method of determining the viscosity of a sample fluid relative to that of a reference fluid comprising causing alternate flows of the sample fluid and the reference fluid through viscosity-sensitive means; alternately employing a common sensor, in syncrhonism with said alternate flows, to effect measurements of a parameter related to the respective flows through the viscosity-sensitive means; and comparing said measurements.

If the viscosity of the reference fluid is known, the measurements may be compared so as to determine the viscosity of the sample fluid. Alternatively, or additionally, the comparison of the measurements may be employed to effect a control. Thus the said comparison may be employed to control the operation of an oil pump arranged to withdraw a quantity of oil from the surface of a quantity of water so as to prevent the oil pump from drawing in water.

The same fluid may be used as both the sample fluid and the reference fluid in order to verify that the results obtained by the method are accurate.

According to another aspect of the present invention, there is provided apparatus for determining the viscosity of a sample fluid relative to that of a reference fluid comprising viscosity-sensitive means through which the fluid may be passed; supply means for supplying alternate flows of the sample fluid and of the reference fluid to the viscosity-sensitive means; a common sensor for effecting measurements of a parameter related to the respective flows through the viscosity-sensitive means; means for operating the sensor in synchronism with said alternate flows to effect said measurements; and comparison means for comparing said measurements.

The said supply means may comprise pump means, the common sensor being arranged to measure a pump parameter.

- 4 -

The pump means may be arranged to produce a substantially constant discharge pressure irrespective of the flow therethrough, the said pump parameter being the time taken by the pump means to discharge a fixed volume of fluid.

Alternatively, the pump means may be arranged to pump the sample and reference fluids alternately for fixed lengths of time, the said pump parameter being the discharge pressure of the pump. In either case, the pump means may be a pressure fluid actuated diaphragm pump.

Thus the diaphragm pump may be a double acting pump comprising chambers for the reference fluid and sample fluid respectively, which chambers are respectively bounded by first and second interconnected diaphragms, and means for alternately admitting pressure fluid to the sides of the said diaphragms remote from the reference and sample fluids.

In one embodiment of the invention, the pump means is arranged to produce a substantially constant flow rate in the fluid discharged therefrom irrespective of the pressure of said fluid, the said pump parameter being the discharge pressure. Thus the pump means may comprise at least one piston pump.

The viscosity-sensitive device may comprise a viscosity accentuator tube. The said tube may have an internal cross-sectional area at least 20 times greater than that of a capillary tube. The tube may be in the form of a spiral or coil.

In one embodiment of the invention, the viscosity-sensitive device is a pump, the common sensor being arranged to measure the pump torque or the power supplied to the pump. Thus the pump may be a gear pump.

The pump means may be submersible and may be carried by a float so that it can be disposed at a predetermined level below the surface of a fluid in which the float is floating.

The invention is illustrated, merely by way of example, in the accompanying drawings, in which:-

Figure 1 is a block diagram illustrating the principle of the present invention,

Figure 2 is a diagrammatic view of an apparatus according to the present invention for determining the relative viscosities of a sample fluid and a reference fluid,

Figure 3A shows graphs of the pressure/time relationship of pressures prevailing in reference and sample chambers of a diaphragm pump forming part of the apparatus of Figure 2,

Figure 3B shows graphs of the velocity/time relationship of fluids passing through a viscosity accentuator forming part of the apparatus of Figure 2,

Figures 4 and 5 are diagrammatic illustrations of two different embodiments of the invention each of which incorporates the apparatus of Figure 2,

Figures 6 and 7 illustrate two further embodiments of apparatus according to the present invention, these embodiments constituting modifications of the apparatus shown in Figure 2,

Figure 8 shows pressure waveforms of the fluid upstream of the viscosity accentuator forming part of the apparatus of Figure 7,

Figures 9, 10 and 11 are diagrammatic illustrations of further embodiments of apparatus according to the present invention, and

Figure 11A is a diagram of a component of Figure 11.

Terms such as "left" and "right", "upper" and "lower", as used in the description below, are to be understood to refer to directions as seen in the accompanying drawings.

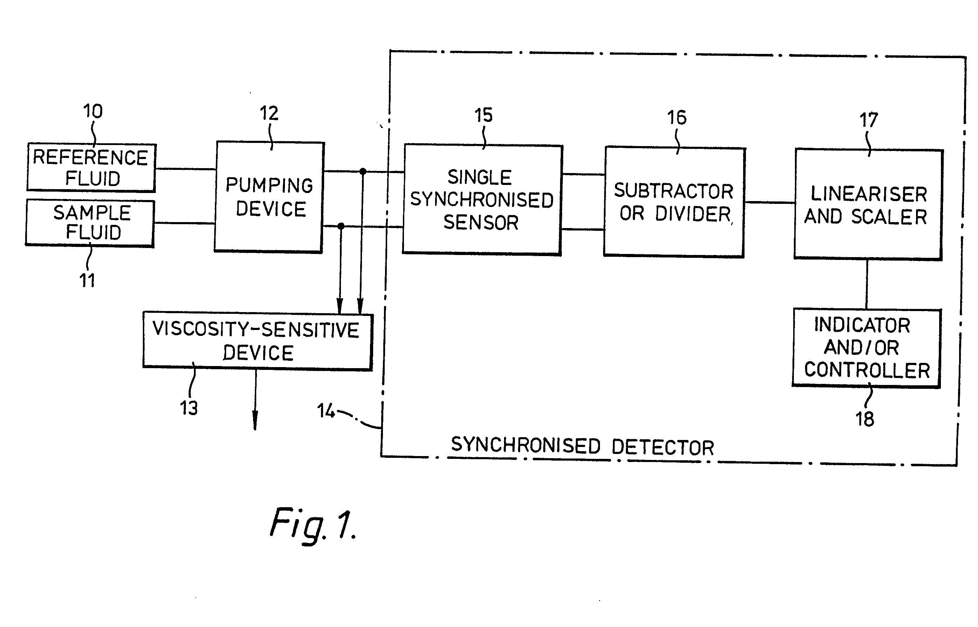

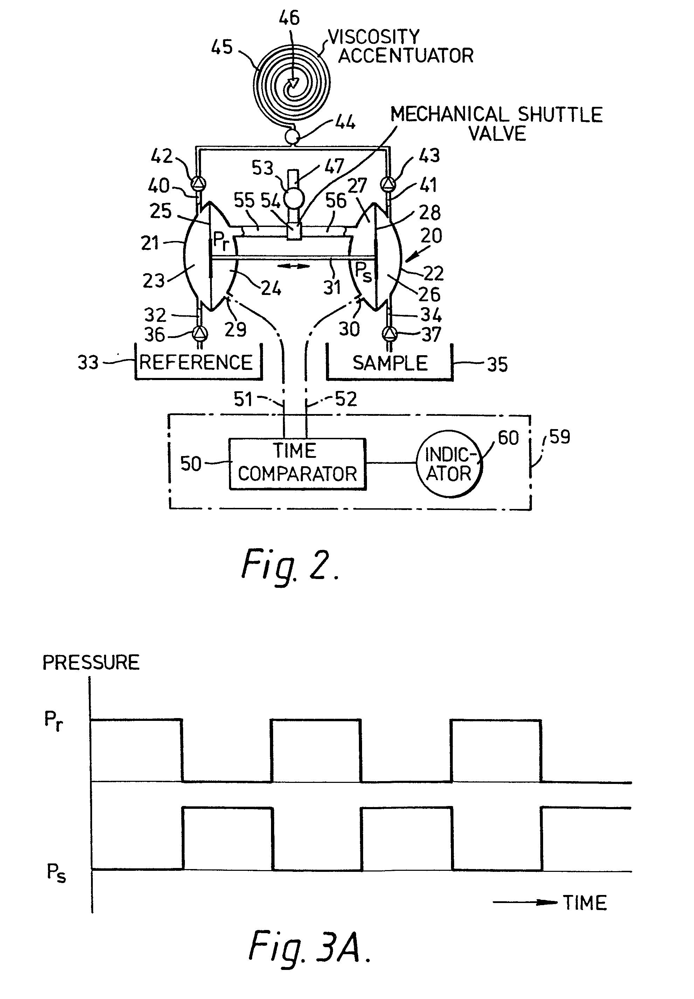

In Figure 1 there is shown a block diagram of an apparatus according to the present invention for determining the relative viscosities of a sample fluid and a reference fluid, the block diagram of Figure 1 illustrating the principle of the present invention. In the Figure 1 apparatus, a reference fluid e.g. water, in a receptacle 10 and a sample fluid, e.g. oil, in a receptacle 11, are alternately pumped by a pumping device 12 through a viscosity-sensitive device 13 (e.g. a viscosity accentuator as shown in Figure 2).

If the pumping device 12 is arranged to produce a substantially constant discharge pressure irrespective of the flow therethrough, then the lengths of time taken by the pumping device 12 to pump similar volumes of reference and sample fluids through the viscosity-sensitive device 13 will depend on the relative viscosities of the sample and reference fluids. Similarly, if the pumping device 12 is arranged to pump the sample and reference fluids alternately for fixed lengths of time, then the relative discharge pressures of the pumping device 12 during the alternate flows of the sample and reference fluids through the viscosity-sensitive device 13 will similarly depend on the said relative viscosities. Furthermore, if the pumping device 12 and viscosity-sensitive device 13 are constituted by one single member, e.g. a gear pump, then the relative torques of the gear pump during the said alternate flows will similarly depend on the said relative viscosities. Thus in all cases the viscosity of the sample fluid relative to that of the reference fluid can be determined by effecting measurements of a parameter (e.g. the said time, pressure or torque) related to the respective flows and comparing these measurements, such measurements being taken in synchronism with the said flows.

This is illustrated, in the block diagram of Figure 1, by the passing of parameter signals, e.g. the said time, pressure or torque signals, to a synchronised detector 14. The latter comprises a synchronised sensor 15 which measures the parameter concerned in synchronism with the alternate flows of the sample and reference fluids. The outputs from the synchronised sensor 15 are transmitted to a subtractor or divider 16 which subtracts one from the other or divides one into the other to provide a comparison therebetween. The output from the subtractor or divider 16 is transmitted to a lineariser and scaler 17 and thence to an indicator and/or controller 18.

As will be appreciated, the synchronised sensor 15, instead of measuring time, pressure or torque, could measure many other parameters, e.g. absorption of sound waves and the damping of mechanical vibrations.

In Figure 2 there is shown a practical apparatus for determining the viscosity of a sample fluid relative to that of a reference fluid. The apparatus comprises a double-acting diaphragm pump 20 which is arranged to produce a substantially constant discharge pressure irrespective of the flow therethrough. The diaphragm pump 20 comprises two convex-shaped housings 21, 22. The housing 21 is divided into chambers 23, 24 by a diaphragm 25, while the housing 22 is divided into chambers 26, 27 by a diaphragm 28. The chambers 24, 27 are respectively provided with ports 29, 30. The diaphragms 25, 28 are interconnected by a rod 31.

The chamber 23 communicates with an inlet conduit 32 which extends into a container 33 for a reference fluid, e.g. water.

The chamber 26 communicates with an inlet conduit 34 which extends into a container 35 for a sample fluid, e.g. oil. The inlet conduits 32, 34 are respectively provided with non-return valves 36, 37.

The chambers 23, 26 respectively communicate with outlet conduits 40, 41 which respectively contain non-return valves 42, 43. Both the outlet conduits 40, 41 communicate with the inlet 44 of a viscosity accentuator 45 which has an outlet 46.

The outlet 46 from the viscosity accentuator 45 can either be arranged to return the reference and sample fluids to the containers 33, 35 or can be arranged to pass them to waste.

The viscosity accentuator 45 is constituted by a spiral-shaped or coiled length of small bore tube whose internal cross-sectional area is nevertheless at least 20 times greater than that of a capillary tube. Alternatively, the viscosity accentuator may, if desired, comprise a plurality of tubes arranged in parallel in order to obtain high sample flow rates.

A fluid-operated time comparator 50 is connected by conduits 51, 52 to the chambers 24, 27 so as to compare the lengths of time during which pressures $P_r$ and $P_s$ respectively prevail therein.

A sensor 59, which includes the time comparator 50, may be digital or analogue and may be electrical or pneumatic.

A supply of compressed air, or other pressure fluid, from a source (not shown) is passed at a constant pressure through a supply conduit 47 and pressure regulator 53 to a three-way mechanical shuttle valve 54 and thence to conduits 55, 56. The valve 54 is settable both to a first position in which it allows air to flow from the said source to the conduit 55 and from the conduit 56 to exhaust, and to a second position in which it allows air to flow from the said source to the conduit 56 and from the conduit 55 to exhaust. The latter communicate respectively with the chambers 24, 27 so as to admit the pressure fluid alternately to the sides of the diaphragms 25, 28 remote from the reference and sample fluids.

In operation, and assuming that the valve 54 is initially in its said first position so as to cause the chamber 24 to communicate with the supply conduit 47, the diaphragm 25 will flex towards the left so as to force reference fluid in the chamber 23 out at a constant discharge pressure through the outlet conduit 40 and through the viscosity accentuator 45. The flexing of the diaphragm 25 towards the left will cause corresponding flexing of the diaphragm 28 by reason of the diaphragms 25, 28 being interconnected by the rod 31. This will cause air to be exhausted from the chamber 27 and sample fluid to be drawn into the chamber 26.

At the end of the leftward stroke of the diaphragm pump 20, the valve 54 will be moved to its said second position so that the interior of the chamber 27 is brought into communication with the supply conduit 47. Air will therefore be forced out of the chamber 24 and sample fluid will be forced out through the outlet conduit 41 and through the viscosity accentuator 45.

During each stroke of the pump, one of the pressures $P_r$, $P_s$ will be at the supply pressure and the other at the exhaust or zero pressure, the pressures being reversed at the end of each stroke. The time comparator 50 receives signals related to these pressures and measures the lengths of time during which each pressure $P_r$, $P_s$ is present and compares these measurements. These times are of course related to the viscosities of the reference and sample fluids.

Thus sample fluid and reference fluid will be alternately supplied by the diaphragm pump 20 to the viscosity accentuator 45 for passage therethrough. The lengths of time which the two fluids will take to pass through the viscosity accentuator 45 will obviously depend on their relative viscosities and consequently the lengths of time which will be taken by the diaphragm pump 20 to discharge fixed volumes of the reference fluid and sample fluid will similarly depend on the said relative viscosities.

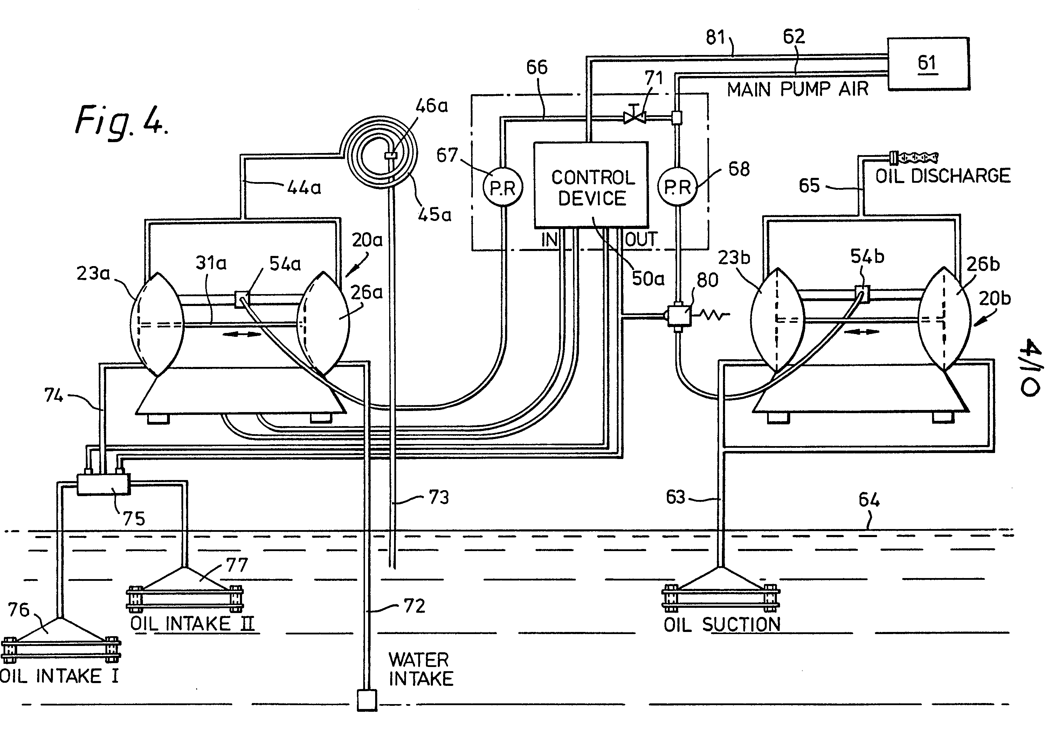

The signals supplied to the time comparator 50 are compared in a portion of the time comparator 50 and such comparisons may involve obtaining the difference between the signals, or may involve their division or ratio. The results of this comparison are fed to a lineariser and a scaler which form part of the time comparator 50 and which are such as to enable a suitably scaled signal to be fed to a meter or indicator 60 so that, if the viscosity of the reference fluid is known, the meter 60 can be calibrated to provide an analogue or digital display of the viscosity of the sample fluid. Additionally, or alternatively, the comparison of the measurements effected in the time comparator 50 may be employed to effect a control, e.g. a process control or a control such as that described below in connection with the embodiment of Figure 4.

As will be appreciated, the chambers 24, 27 are alternately pressurized in synchronism with the alternate flows of sample fluid and reference fluid which pass through the viscosity accentuator 45. Consequently the sensor 59, which constitutes a common sensor for effecting measurements of a parameter, namely times of presence of the pressures $P_r$, $P_s$, related to the said flow, is similarly operated in synchronism with said flows.

- 11 -

The synchronisation referred to above is achieved in the Figure 2 embodiment by synchronising the pressure $P_r$ with the flow of reference fluid and the pressure $P_s$ with the sample fluid. Alternatively, however, the sensor 59 could be alternated between two fluid lines.

The diaphragm pump 20 may, if desired, be replaced by a piston pump.

The apparatus of Figure 2 constitutes an inexpensive apparatus for evaluating the viscosity of the sample fluid since the same equipment and sensor are used in comparing the sample fluid with the reference fluid. Moreover, since the measurements of both the sample and reference fluids are taken by the same apparatus under the same conditions, a comparison of these measurements. e.g. by taking their ratio, will have the effect of cancelling all variables, e.g. $\Delta p$, T, V, L, d, other than viscosity. Furthermore, by reason of using the same sensor 59, the absolute accuracy of this sensor is not important and long term drift effects are greatly reduced.

The viscosity accentuator 45, since it is constituted by a small bore tube whose internal cross-sectional area is at least 20 times that of the capillary tube, allows laminar or turbulent flow of both Newtonian and non-Newtonian fluids, thereby enabling the apparatus of Figure 2 to handle slurries, muds, emulsions and dirty fluids which cannot be handled by normal viscometers. Provided that the sample fluid is capable of being pumped, the apparatus shown in Figure 2 can be used to measure its viscosity.

The upper graph in Figure 3A shows the variation with the time of the pressure $P_r$ within the chamber 24, while the lower graph of Figure 3A shows the variation with time of the

presusre $P_s$ within the chamber 27. When the viscosity of the sample fluid is the same as that of the reference fluid, the waveforms shown in the upper and lower graphs of Figure 3A are identical, although, of course, out of phase.

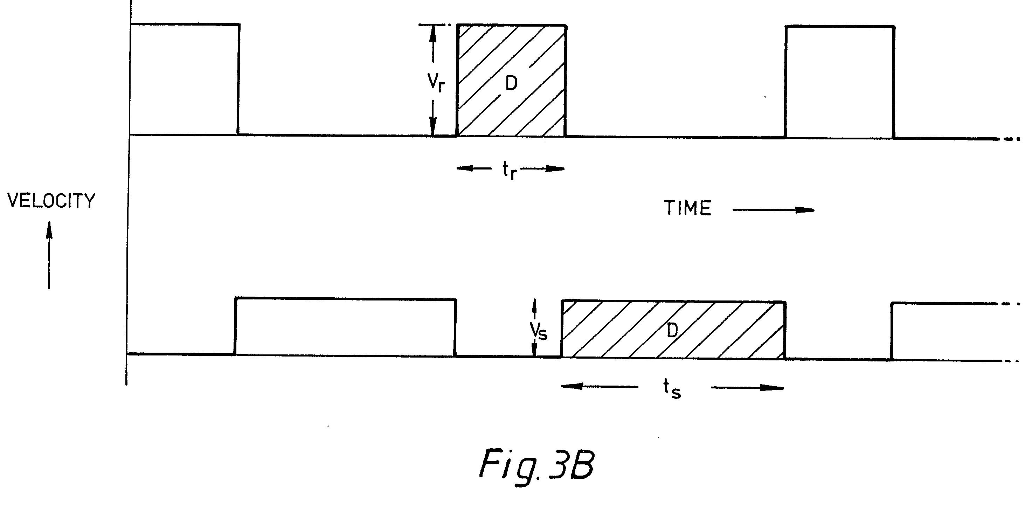

In Figure 3B, there is shown graphs whose ordinate represents velocity and whose abscissa represents time. The upper graph shows the waveform of a reference fluid passing through the viscosity accentuator 45 during the reference cycle, the reference fluid having a viscosity $\mu_r$ which is less than that of the viscosity $\mu_s$ of the sample fluid. The lower graph of Figure 3B shows the waveform of the sample fluid passing through the viscosity accentuator 45 during the sample cycle. The displacement

$$D = V_r t_r = V_s t_s.$$

It should be noted that the cycle time for the sample fluid is longer than that for the reference fluid because the more viscous fluid flows at a slower pace and takes longer to discharge the same volume, giving

$$\mu_s/\mu_r = t_s/t_r,$$

where $t_r$ and $t_s$ are respectively the times of presence of the pressures $P_r$, $P_s$.

In Figure 4 there is shown an embodiment of the present invention which incorporates an apparatus similar to that of Figure 2. This apparatus will therefore not be described in detail again, parts of the Figure 4 construction which correspond to that of Figure 2 being given the same reference numerals with the addition of a suffix a or b. In the case of the Figure 4 construction, however, the said apparatus is not used to provide an indication of the viscosity of a sample but is used as an interface detector to control operation of an oil pump when the latter is used to pump out from a pond either oil or an oil/water emulsion which is lying on the surface of the water in the pond without pumping out the uncontaminated water underneath.

- 13 -

A source 61 is compressed air or other pressure fluid is supplied to a main pump conduit 62 and thus to the valve 54b of a diaphragm pump 20b which acts as an oil pump and whose construction is generally similar to that of the diaphragm pump 20 of Figure 2 except that its chambers 23b, 26b, instead of communicating respectively with the reference and sample fluids, both communicate with an oil suction pipe 63 which extends below the surface 64 of the pond. Thus when the diaphragm pump 20b is operating, oil will be alternately sucked into either the chamber 23b or the chamber 26b and will be expelled through the other chamber into an oil discharge pipe 65. A pump of this type is manufactured by the Warren Rupp Company of Mansfield, Ohio, United States of America.

The main pump conduit 62 also communicates with a branch conduit 66 so that compressed air can be supplied to the valve 54a of a diaphragm pump 20a. Pressure regulators 67, 68 are provided in the branch conduit 66 and in the main pump conduit 62 respectively. The branch conduit 66 also contains a valve 71.

The chamber 26a of the diaphragm pump 20a communicates with a water intake conduit 72 which extends below the surface 64 and into a position well below the bottom of the oil suction pipe 63 so as to ensure that the water entering the chamber 26a will be unpolluted by oil.

The outlet 46a of the viscosity accentuator 45a communicates with a discharge pipe 73 which extends below the surface 64 so that fluids which have passed through the viscosity accentuator 45a are returned to the pond.

The chamber 23a communicates with a conduit 74 which extends to a two-position valve 75. The position of the valve 75 is controlled by a control device 50a. The valve 75 is movable between a first position in which it permits communication between the conduit 74 and a first or lower oil intake 76 and a second position in which it permits communication between the conduit 74 and a second or upper oil intake 77. Both the oil intakes 76, 77 are positioned below the intake end of the oil suction pipe 63.

The structure described above is supported by fixed structure (not shown) or by a common float (not shown) which floats on the surface 64.

In operation, when the quantity of oil is such as to cover the first intake 76, the diaphragm pump 20b is switched on and simultaneously the valve 75 is placed in the position in which the second oil intake 77 communicates with the conduit 74. Thus oil is sucked out through the second oil intake 77. When the level of the oil reaches the second oil intake 77, the diaphragm pump 20b is switched off and simultaneously the valve 75 is switched back to its position in which the first oil intake 76 communicates with the conduit 74. The arrangement is such that oil suction continues until the viscosities of the fluids in the chambers 23a, 26a are the same, which will occur when water reaches the second oil intake 77. When this occurs, the control device 50a causes the diaphragm pump 20b to be switched off.

The flow rate of the diaphragm pump 20b can be controlled by an assembly 80 of three differently sized flow control valves arranged in a binary form, e.g. in 1/8, 1/4 and ½ of the total air rate. The assembly 80 is disposed in the main pump conduits 62 so as to control the flow therethrough.

The control device 50a may be operated electrically or may, as shown, be operated pneumatically by air supplied from the source 61 by way of a conduit 81.

The structure shown in Figure 4 may be used together with a skimmer (not shown) which skims off a quantity of oil on the surface of the sea and collects the oil in an open bottom container floating on the water. The Figure 4 structure would be used to pump out the oil only and not the water from the container.

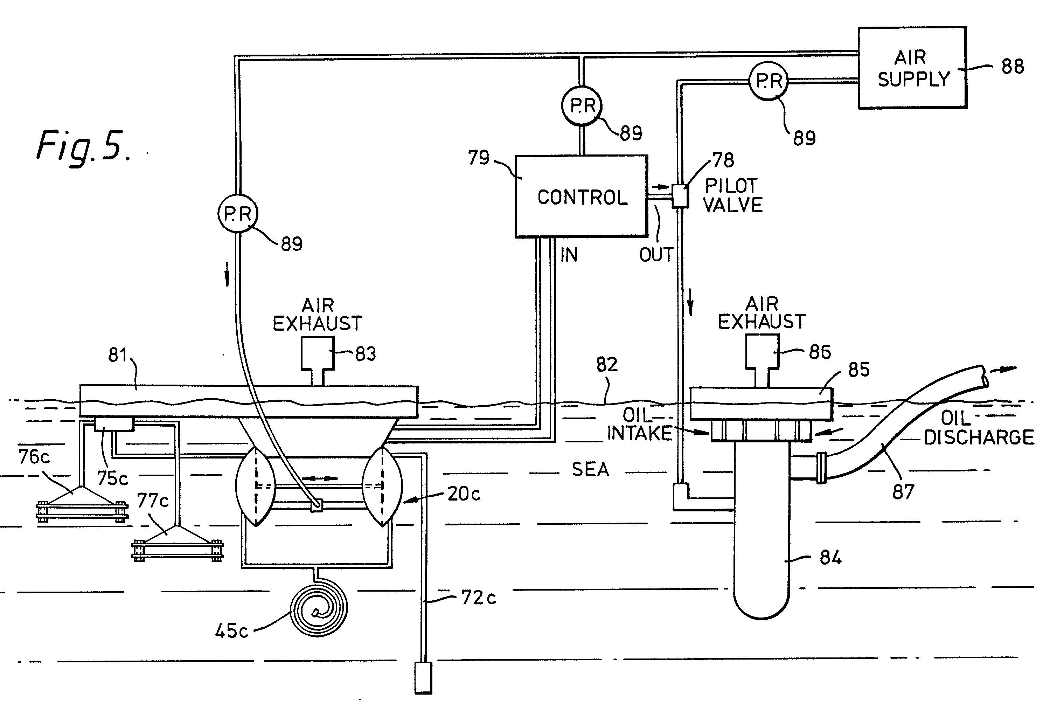

In Figure 5 there is shown an embodiment of the present invention which is generally similar to that of Figure 4 and which for this reason will not be described in detail. Those parts of the Figure 5 construction which are similar to the parts of Figure 4 are given the same reference numerals with the addition of the suffix c.

The embodiment of Figure 5 is intended for use in a tank, a deep pond, or the sea. The diaphragm pump 20c, the viscosity accentuator 45c, the valve 75c, the water intake 72c, and the oil intakes 76c, 77c are all submerged in the sea and are carried by a float 81 which floats in the surface 82 of the sea. The float 81 is provided with an air exhaust 83 through which may be passed to atmosphere the compressed air discharged from the diaphragm pump 20c.

The apparatus of Figure 5 also comprises a submerged housing 84 which is carried by a float 85 having an air exhaust 86. The housing 84 contains a centrifugal pump which is used to suck the oil from the sea and into a discharge conduit 87. Compressed air from an air supply 88 is passed to the diaphragm pump 20c and the said centrifugal pump by lines containing pressure regulators 89. The air supply to the centrifugal pump is controlled by a pilot valve 78 which is in turn controlled by a control 79 which, as in the Figure 4 construction, will itself be controlled by the viscosity signals it receives from the diaphragm pump 20c.

As will be appreciated from the embodiments of Figures 4 and 5, the present invention permits interface detection of any emulsion (e.g. oil/water) even if the differences in the specific gravity, electrical conductivity, permeability, thermal conductivity and the like between the emulsion and the base fluid are small. The interface detector can be used to automatically control pumps, valves, or weirs and can be used to drain water from settling tanks and to adjust the level of a skimming weir in an API (American Petroleum Institute) Separator.

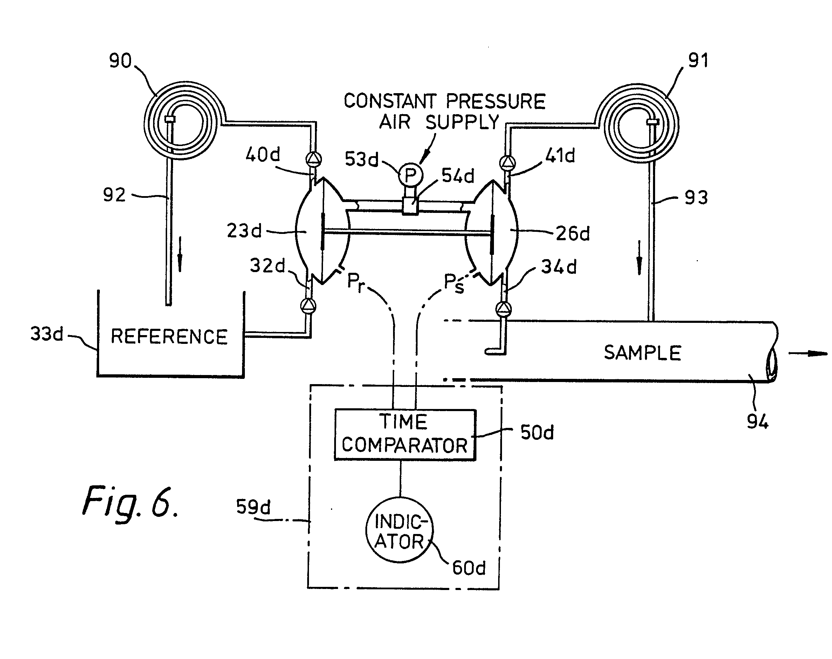

In Figure 6 there is shown an apparatus which is generally similar to that of Figure 2 and which, for this reason, will not be described in detail. Parts of the Figure 6 construction which correspond to those of Figure 2 are given the same reference numerals with the addition of the suffix d.

In the Figure 6 construction, however, instead of using a single viscosity accentuator 45 use is made of two separate viscosity accentuators 90, 91 which are either identical to each other or which have known relative characteristics.

The viscosity accentuator 90 communicates with the outlet conduit 40d and has a discharge pipe 92 for returning the reference fluid to the container 33d. The viscosity accentuator 91 communicates with the outlet conduit 41d and has an outlet 93 for returning the sample fluid to a sample conduit 94 through which it is flowing. The inlet conduit 34d to the chamber 26d also communicates with the sample conduit 94.

In the Figure 6 arrangement, therefore, there can be no contamination of one fluid by the other.

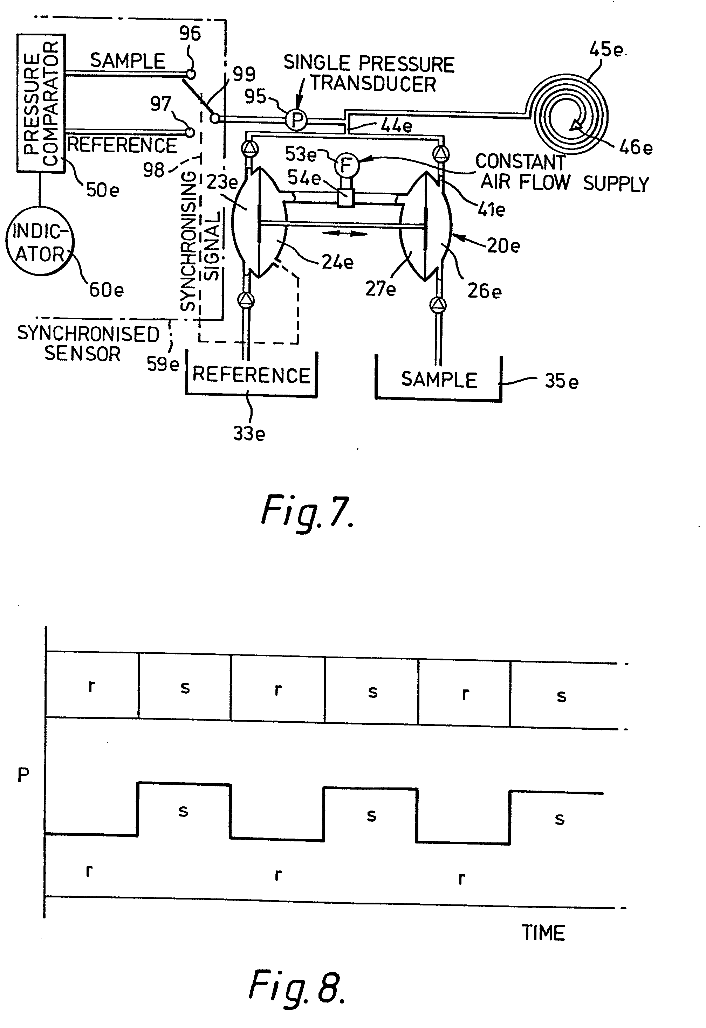

The embodiment of Figure 7 is substantially the same as that of Figure 2, like parts being given the same reference numerals with the addition of the suffix e. The diaphragm pump 20e, however, instead of producing a constant pressure discharge, is arranged to produce a substantially constant flow rate in the fluids discharged therefrom irrespective of the pressure of these fluids. The Figure 7 embodiment thus includes a flow regulator 53e to provide a constant air flow supply to the air chambers 24e, 27e. The pressures produced during the reference and sample cycles will therefore differ from each other in a manner corresponding to the difference between the viscosities of the fluids. The pressure of the pump output is measured by a single pressure transducer 95 the signals from which are alternately passed to sample and reference channels 96, 97 which form part (by means not shown) of a pressure comparator 50e. The pressure comparator 50e constitutes a replacement for the time comparator and is synchronised with the operation of the air chamber 24e by a synchronising signal, indicated by dotted line 98, which controls the position of a switch 99. The pressure comparator 50e compares the pressure during the sample cycle with that during the reference cycle.

The upper waveform shown in Figure 8 is the waveform of the fluid upstream of the viscosity accentuator 45e when the reference fluid r and the sample fluid s have identical viscosities.

The lower waveform in Figure 8 is the waveform of the fluid upstream of the viscosity accentuator 45e when the sample fluid s is more viscous than the reference fluid r. In this case, the higher viscosity fluid requires a higher pressure to maintain the constant flow rate, giving $\mu_s/\mu_r = P_s/P_r$.

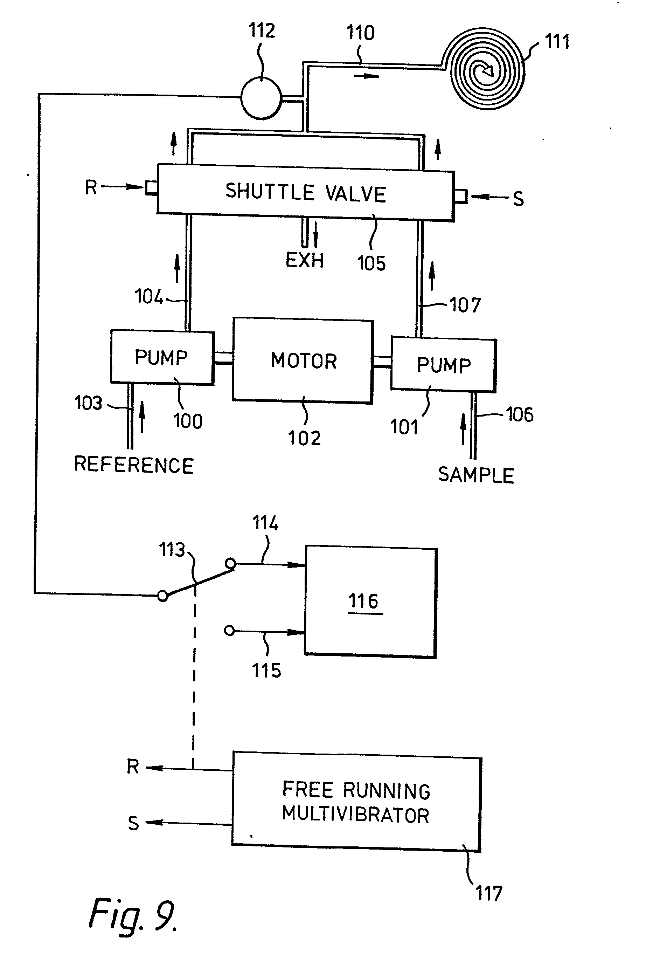

In Figure 9 there is shown another embodiment of an apparatus according to the present invention for determining the viscosity of a sample fluid relative to that of a reference fluid. In the Figure 9 construction, a reference fluid pump 100 and a sample fluid pump 101, each of which is a positive displacement pump, are arranged to be driven by a common electric motor 102 at the same speed. The reference fluid pump 100 has an inlet 103 for the reference fluid and an outlet 104 the flow through which is controlled by a shuttle valve 105. The sample fluid pump 101 has an inlet 106 for the sample fluid and an outlet 107 the flow through which is also controlled by the shuttle valve 105. The pump outlets 104, 107 communicate with a common conduit 110 which extends to a viscosity accentuator 111 corresponding to the viscosity accentuator 45 of the Figure 1 construction. The pressure in the common conduit 110 is sensed by a single pressure sensor 112 the signals from which are alternately transmitted by a switch 113 to a reference channel 114 and a sample channel 115 of a control circuit 116. The switch 113 is driven by a free running multi-vibrator 117.

The shuttle valve 105 is a four way solenoid valve which is moved (by means not shown) by the free running multi-vibrator 117 synchronously with the movement by the latter of the switch 113.

The control circuit 116 compares the signals received through the reference channel 114 and sample channel 115, e.g. by subtracting one from the other or by obtaining a ratio of one to the other, linearises the result, and displays it, e.g. in digital form.

In all the above-mentioned embodiments of the invention at least one viscosity accentuator has been used and a pump has been provided to pump the fluids through the viscosity accentuator. However, although the present invention must include a viscosity sensitive device, this can be constituted by the pump itself if the latter is, for example, a gear pump. In that case, the torque or power supply to the pump will vary in dependence upon the viscosity of the fluid passing therethrough, and consequently a measurement of this torque or power will be representative of the said viscosity.

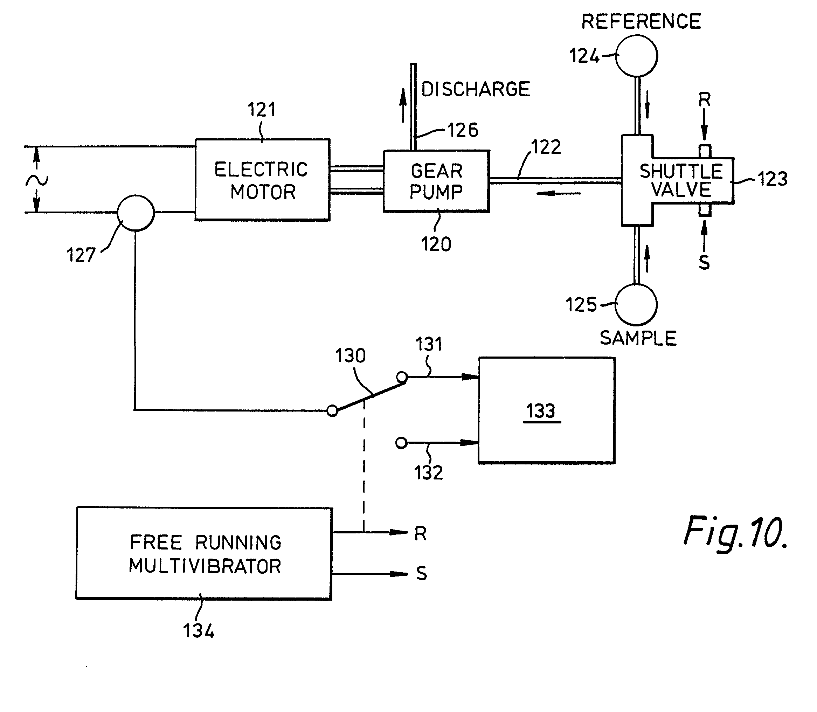

In Figure 10 there is therefore shown an embodiment of the present invention which comprises a single gear pump 120 which is driven by an electric synchronous motor 121. The gear pump 120 has an inlet conduit 122 which extends from a shuttle valve 123 constituted by a three-way solenoid valve. The shuttle valve 123 is alternately settable in positions in which a source 124 of reference fluid and a source 125 of sample fluid are brought into communication with the inlet conduit 122. The gear pump 120 will, therefore in operation alternately draw in reference fluid from the source 124 and sample fluid from the source 125 and will discharge both these fluids through an outlet conduit 126.

The input current to the electric motor 121 is measured by a meter 127 signals from which are transmitted by way of a switch 130 alternately to a reference channel 131 and to a sample channel 132 of a control circuit 133. The switch 130 is moved between its two positions by a free-running multi-vibrator 134 signals from which (by means not shown) are transmitted to the shuttle valve 123 so that when the latter is in the position in which reference fluid from the source 124 passes by way of the shuttle valve 123 to the gear pump 120, signals representative of the power supplied to the electric motor 121 are transmitted to the reference channel 131. Similarly, when the shuttle valve 123 is in the position in which sample fluid from the source 125 is permitted to pass to and through the gear pump 120, the signals from the meter 127 are transmitted to the sample channel 132.

The control circuit 133 comprises a subtraction or ratio circuits and a lineariser circuit so as to produce an analogue or digital indication of the value of the viscosity of the sample fluid.

As will be appreciated in the case of all the apparatus described above, the apparatus may be tested by passing the same fluid through both the reference and sample sides of the apparatus so as to verify that the apparatus is functioning satisfactorily.

Reference has been made above in connection with Figure 2 to a time comparator 50. The latter constitutes in essence an up/down counter. Pressure in the chamber 24 is transmitted through port 29 so as to start a clock counting up during the flow of the reference fluid through the viscosity accentuator 45, and pressure in the chamber 27 is transmitted through the port 30 to make the clock count down during the flow of the sample fluid through the viscosity accentuator 45. The net reading on the counter (up minus down) shows which of the reference or sample flows is the longer and therefore which fluid is the more viscous. After each up/down count, the counter is reset to zero and the process starts again.

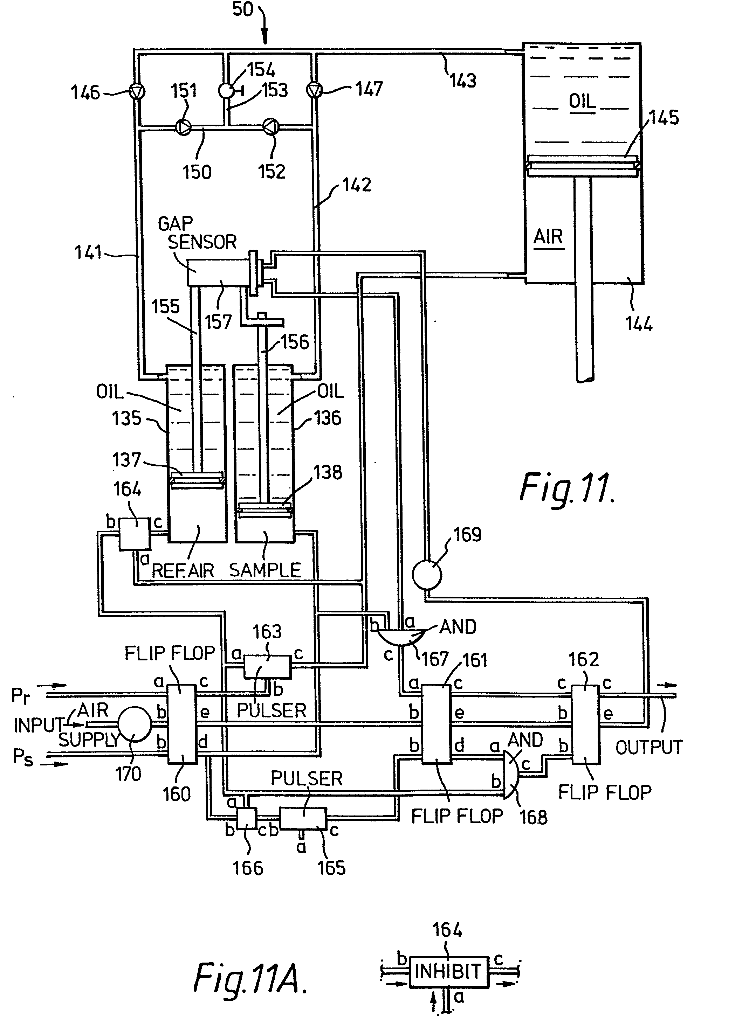

The construction of the time comparator 50 is illustrated in Figure 11. A reference cylinder 135 and a sample cylinder 136 have double acting pistons 137, 138 respectively. Hydraulic liquid (e.g. oil) may be supplied to the upper sides of the pistons 137, 138,by way of conduits 141, 142 respectively, the lower sides of the pistons 137, 138 being open to air pressures, as described below. The conduits 141, 142 both communicate with a condit 143 which extends to a cylinder 144 to the upper side of a double acting piston 145 therein. Thus hydraulic liquid may be supplied to the upper side of the piston 145 whose lower side, as described below, is open to an air pressure. Non-return valves 146, 147 in the conduits 141, 142 ensure flow through these conduits towards the cylinders 135, 136 only. As described below, operation of the piston 145 resets the pistons 137, 138 to a datum or zero position.

The conduits 141, 142 communicate with a conduit 150 which extends therebetween and in which are arranged non-return valves 151, 152 which permit flow only in directions towards a passage 153. The conduit 150 communicates with the conduit 143 by way of the passage 153 flow through which is controlled by a single needle valve 154 which acts as a timing restrictor. The arrangement of the conduits 141-143 and 153 together with the non-return valves 146, 147, 151, 152 constitutes an hydraulic Gratz bridge.

The pistons 137, 138 have piston rods 155, 156 respectively whose extension is proportional to time and is sensed by a gap sensor 157 which is attached to the piston rod 156.

The time comparator 50 is controlled by a pneumatically operated logic circuit which comprises flip-flops 160, 161, 162, pulsers or differentiators 163, 165, inhibits 164, 166 and AND gates 167, 168. The flip-flop 160 is controlled by inputs $\underline{a}$, $\underline{b}$ open to the pressures $P_r$, $P_s$ in the chambers 24, 27 respectively. The flip-flop 160 acts to switch a constant air pressure from a pressure regulator 170 alternatively to the lower sides of pistons 137 ,138. The said air pressure is also fed to the flip-flops 161, 162 and to the gap sensor 157 by way of a pressure regulator 169.

In the time comparator 50 the pistons 137, 138 are operated to push oil through the common restrictor constituted by the needle valve 154. The displacement of the piston rods 155, 156 is a measure of the times $t_r$ and $t_s$ (Figure 3B) respectively.

Thus throughout the time that the reference fluid flows through the viscosity accentuator 45, air is supplied to the space below the piston 137 so as to move the latter, and consequently oil flows by way of the conduit 141, the non-return valve 151, the needle valve 154, and the conduit 143 to the space in the cylinder 144 above the piston 145. Similarly, throughout the time that the sample fluid flows through the viscosity accentuator 45, air is supplied to the space below the piston 138 so as to move the latter, and consequently oil flows by way of the conduit 142, the non-return valve 152, the needle valve 154, and the conduit 143 to the space in the cylinder 144 above the piston 145. When air is supplied to the space below the piston 145 so as to move the latter,oil flows by way of the conduit 143, the non-return valves 146, 147, and the conduits 141, 142 to the spaces in the cylinders 135, 136 above the pistons 137,138 respectively to reset the latter to their datum or zero positions.

Since the air pressure supplied to the cylinders 135, 136 is the same air pressure, namely that regulated by the pressure regulator 170, and the oil from the cylinders 135, 136 passes through the same needle valve 154, the timing of the movements of the pistons 137, 138 is the same.

As shown in Figure 11A, the inhibit 164 has inputs $a$, $b$ and an output $c$. The output $c$ is ON only if input $a$ is OFF and input $b$ is ON. The output $c$ is OFF if $a$ is ON or $b$ is OFF. The inhibit 164 controls the air supply to the lower side of the piston 137 and its function is to cut off that supply during the reset stroke of the piston 145 during which time there is a signal on the input $a$ of the inhibit 164. The inhibit 166 operates in a similar manner to the inhibit 164 and is provided to ensure that there is no ambiguity during the change-over period from the flip-flop 160 being controlled by the pressure $P_r$ to its being controlled by the pressure $P_s$.

The pulsers 163, 165 emit short output pulses when the input is on regardless of the input duration. The pulser 163 is used to give the reset pulse to the piston 145. The pulser 165 is used to reset $d$ of flip-flop 161 at the start of each sample fluid cycle.

In operation, if the sample fluid is more viscous than the reference fluid,$t_s$ is greater than $t_r$ and the gap sensor 157 attached to the piston rod 156 uncovers the piston rod 155 and gives a signal at the input $\underline{a}$ on the AND gate 167. The signal at the input $\underline{b}$ on the AND gate 167 depends upon the pressure $P_s$. Thus only when both the pressure $P_s$ and the gap sensor 157 are ON will there be an output at $\underline{c}$ for transmission to the flip-flop 161. The provision of the AND gate 167 ensures that the gap sensor 157 cannot give a false signal to the flip-flop 161 during the return stroke of the pistons 137, 138 since the pressure $P_2$ is not present at this time.

The output on $\underline{c}$ of the flip-flop 161 is the required output which indicates whether the sample viscosity is greater than the reference viscosity. However, the flip-flop 161 is reset each cycle, which is the reason for the provision of the flip-flop 162 and AND gate 168. The output at $\underline{c}$ on flip-flop 162 is the required output and remains there as long as the flip-flop 161 has an output at $\underline{c}$ each cycle. The flip-flop 162 can only be reset by the AND gate 168, i.e. when there is no signal from the gap sensor 157. This output from $\underline{c}$ of flip-flop 162 is used in the Figure 4 construction to switch on the pump 20$\underline{b}$.

- 25 -

CLAIMS

1. A method of determining the viscosity of a sample fluid (11) relative to that of a reference fluid (10), characterised by causing alternate flows of the sample fluid (11) and the reference fluid (10) through viscosity-sensitive means (13,45), alternately employing a common sensor (14), in synchronism with said alternate flows, to effect measurements of a parameter related to the respective flows through the viscosity-sensitive means (13,45); and comparing said measurements.

2. A method as claimed in claim 1 characterised in that the measurements are compared so as to determine the viscosity of the sample fluid (11), the viscosity of the reference fluid (10) being known.

3. A method as claimed in claim 1 or 2 characterised in that the comparison of the measurements is employed to effect a control.

4. A method as claimed in claim 3 characterised in that the said comparison is employed to control the operation of an oil pump (20b) arranged to withdraw a quantity of oil from the surface of a quantity of water so as to prevent the oil pump (20b) from drawing in water.

5. A method as claimed in any preceding claim characterised in that a pump (12,20) is employed to pump the sample and reference fluids (11,10) through the viscosity-sensitive means (13), the said measurements being measurements of a pump parameter.

6. A method as claimed in claim 5 characterised in that the pump (12,20) produces a substantially constant discharge pressure irrespective of the flow therethrough, and the time taken by the pump (12,20) to discharge a fixed volume of fluid is measured.

7.      A method as claimed in claim 5 characterised in that the pump (12,20) produces a substantially constant flow rate in the fluid discharged therefrom irrespective of the pressure of said fluid, and the pressure of the pump output is measured.

8.      A method as claimed in any of claims 1-4 characterised in that the viscosity-sensitive means is a pump (120), the torque or power supplied to the pump (120) being measured.

9.      A method as claimed in any preceding claim characterised in that the same fluid is used as both the sample fluid and the reference fluid in order to verify that the results obtained by the method are accurate.

10.     Apparatus for determining the viscosity of a sample fluid relative to that of a reference fluid comprising viscosity-sensitive means through which the fluids may be passed, characterised by supply means (20) for supplying alternate flows of the sample fluid and of the reference fluid to the viscosity-sensitive means (45); a common sensor (14) for effecting measurements of a parameter related to the respective flows through the viscosity-sensitive means (45); means (15) for operating the sensor (14) in synchronism with said alternate flows to effect said measurements; and comparison means (16) for comparing said measurements.

11.     Apparatus as claimed in claim 10 characterised in that the supply means comprises pump means (20), the common sensor (14) being arranged to measure a pump parameter.

12.     Apparatus as claimed in claim 11 characterised in that the pump means (20) is arranged to produce a substantially constant discharge pressure irrespective of the flow therethrough, the said pump parameter being the time taken by the pump means to discharge a fixed volume of fluid.

13.    Apparatus as claimed in claim 11 characterised in that the pump means (20) is arranged to pump the sample and reference fluids alternately for fixed lengths of time, the said pump parameter being the discharge pressure of the pump means (20).

14.    Apparatus as claimed in claim 11, 12 or 13 characterised in that the pump means is a pressure fluid actuated diaphragm pump (20).

15.    Apparatus as claimed in claim 14 characterised in that the diaphragm pump (20) is a double acting pump comprising chambers (23,27) for the reference fluid and sample fluid resepctively, which chambers (23,27) are respectively bounded by first and second interconnected diaphragms (25,28) and means (53,54) for alternately admitting pressure fluid to the sides of the said diaphragms (25,28) remote from the reference and sample fluids.

16.    Apparatus as claimed in claim 11 characterised in that the pump means (20) is arranged to produce a substantially constant flow rate in the fluid discharged therefrom irrespective of the pressure of said fluid, the said pump parameter being the discharge pressure.

17.    Apparatus as claimed in claim 11, 12 or 16 characterised in that the pump means comprises at least one piston pump.

18.    Apparatus as claimed in claim 11 characterised in that the pump means comprise a reference fluid pump (100) and a sample fluid pump (101) which are positive displacement pumps arranged to be driven by a common motor (102) at the same speed, the pump outlets (104,107) communicating by way of a shuttle valve (105) with a common conduit (110), the pump parameter being the pressure in the said conduit (110).

19.     Apparatus as claimed in any of claims 11-18 characterised in that the viscosity-sensitive means comprises at least one viscosity accentuator tube (45).

20.     Apparatus as claimed in claim 19 characterised in that the or each said tube (45) has an internal cross sectional area at least 20 times greater than that of a capillary tube.

21.     Apparatus as claimed in claim 19 or 20 characterised in that the or each said tube (45) is in the form of a spiral or coil.

22.     Apparatus as claimed in claim 10 characterised in that the viscosity-sensitive device is a pump (120), the common sensor (133) being arranged to measure the pump torque or the power supplied to the pump (120).

23.     Apparatus as claimed in claim 22 characterised in that the pump is a gear pump (120).

24.     Apparatus as claimed in any of claims 11-23 characterised in that the pump means is submersible and is carried by a float (81) so that it can be disposed at a predetermined level below the surface of a fluid in which the float is floating.

Fig.1.

1/10

0065831

46
45 VISCOSITY ACCENTUATOR

44 MECHANICAL SHUTTLE VALVE

42
40
25
21
23
32
36

53 47
55 54 56
Pr
24
29
33 REFERENCE

43
41
27
28
20
22
26
34
37
Ps
31
30
35 SAMPLE

51 52

50 TIME COMPARATOR | INDIC-ATOR 60 59

Fig. 2.

Fig. 3A.

PRESSURE

Pr

Ps

TIME

Fig. 3B

VELOCITY

TIME

3/10

0065831

Fig. 4.

OIL INTAKE I

OIL INTAKE II

WATER INTAKE

OIL SUCTION

OIL DISCHARGE

MAIN PUMP AIR

CONTROL DEVICE

IN    OUT

P.R    P.R

Fig.5.

AIR SUPPLY — 88

P.R — 89

79 — CONTROL

78 PILOT VALVE

P.R — 89

IN   OUT

AIR EXHAUST — 83

AIR EXHAUST — 86

81

82

85

OIL INTAKE

OIL DISCHARGE

76c

75c

77c

20c

SEA

84

45c

72c

87

Fig. 6.

0065831

0065831

7/10

**Fig.7.**

**Fig.8.**

*Fig. 9.*

REFERENCE

SHUTTLE VALVE

R

S

123

124

125

SAMPLE

122

DISCHARGE

126

GEAR PUMP

120

ELECTRIC MOTOR

121

127

131

132

130

133

R

S

FREE RUNNING MULTIVIBRATOR

134

Fig.10.

0065831

10/10

Fig.11.

Fig.11A.